# EUROPÄISCHE PATENTANMELDUNG

(11) **EP 2 821 763 A1**
(43) Veröffentlichungstag der Anmeldung: **07.01.2015**
(21) Anmeldenummer: 14164361.9
(22) Anmeldetag: 11.04.2014
(51) Int. Cl.: G01J 5/08, G01J 5/04, G01J 5/00

(54) **Elektrisches/elektronisches Installationsgerät mit Passiv-Infrarot-Bewegungsmelder**

(30) Priorität: 01.07.2013 DE 102013106852
(71) Anmelder: Insta Elektro GmbH, 58509 Lüdenscheid (DE)
(72) Erfinder: Stöhr, Axel, 42477 Radevormwald (DE); Wehlmann, Friedhelm, 45739 Oer-Erkenschwick (DE); Voigtländer, Andreas, 58509 Lüdenscheid (DE)

(57) **Zusammenfassung**

Es wird ein elektrisches/elektronisches Installationsgerät mit Passiv-Infrarot-Bewegungsmelder vorgeschlagen, zu dem Zweck, ein elektrisches/elektronisches Installationsgerät zu schaffen, welches bei flacher Bauform mit besonders geringer Aufbauhöhe eine besonders zuverlässige automatische Erfassung von sich im Erfassungsbereich befindlichen Personen gewährleistet, ist ein erstes Spiegelsystem vorgesehen, das für mehrere erste Linsensegmente der Abdeckung jeweils zumindest ein eigenes erstes Spiegelelement aufweist, welche die, von außen über das zugehörige erste Linsensegment zugeführte Infrarotstrahlung jeweils über zumindest ein zweites Spiegelelement eines zweiten Spiegelsystems auf den, zumindest einen, auf der elektrischen Leiterplatte angeordneten Infrarotsensor übertragen.

## Beschreibung

Die vorliegende Erfindung geht von einem gemäß Oberbegriff des Hauptanspruches konzipierten elektrischen/elektronischen Installationsgerät mit Passiv-Infrarot-Bewegungsmelder aus.

Derartige elektrische/elektronische Installationsgeräte mit Passiv-Infrarot-Bewegungsmelder sind in der Regel dafür vorgesehen, innerhalb und/oder außerhalb von Gebäuden auf automatische Art und Weise Aktoren bzw. Verbraucher wie z. B. eine zugeordnete Beleuchtungseinrichtung, Jalousien, Gebäudeheizungen usw. bedarfsgerecht zu beeinflussen. Viele solcher bekannten elektrischen/elektronischen Installationsgeräte mit Passiv-Infrarot-Bewegungsmelder weisen jedoch eine, in erheblichem Maße auf die Installationswand aufbauende Optik auf, damit eine zuverlässige automatische Erfassung von sich im Erfassungsbereich befindlichen Personen gewährleistet ist. Oftmals ist es aus Designgründen jedoch wünschenswert, dass sich die Optik des Passiv-Infrarot-Bewegungsmelders formschön in die bestehende Gestaltung der Programmlinie der zugehörigen elektrischen/elektronischen Installationsgeräte einfügt, wobei insbesondere eine flache, nur geringfügig aufbauende, Bauform wünschenswert ist.

Durch die DE 43 33 707 C2 ist ein dem Oberbegriff des Hauptanspruches entsprechendes elektrisches/elektronisches Installationsgerät mit Passiv-Infrarot-Bewegungsmelder bekannt geworden. Dieses mit einem Passiv-Infrarot-Bewegungsmelder ausgerüstete elektrische/elektronische Installationsgerät weist mehrere Erfassungsbereiche auf, wobei der Passiv-Infrarot-Bewegungsmelder mit zwei Infrarotsensoren und einem mehrere Spiegelelemente aufweisenden Spiegelsystem ausgerüstet ist. Zudem ist eine mehrere Linsensegmente aufweisende Abdeckung bzw. Optik vorgesehen. Die Spiegelelemente und die beiden Infrarotsensoren sind auf einer elektrischen Leiterplatte angeordnet, auf welcher auch zumindest ein Teil der für die Funktion notwendigen elektrischen/elektronischen Bauteile angeordnet ist. Die elektrische Leiterplatte wird am Boden, des auch zur Aufnahme der Abdeckung vorgesehenen Installationsgerätegehäuses festgelegt. Die Abdeckung weist wegen der Bauform des Spiegelsystems und der Anordnung der beiden Sensorelemente eine bauchige Gestaltung auf, die in beachtlichem Maße aus der parallel zur Installationswand verlaufenden Hauptfläche des elektrischen/elektronischen Installationsgerätes herausragt. Eine solche Ausgestaltung gewährleistet eine besonders zuverlässige automatische Erfassung von sich im Erfassungsbereich befindlichen Personen, wobei eine gute Empfindlichkeit für einen Erfassungswinkel von ca. 180° gewährleistet ist.

Ausgehend von einem derart ausgebildeten elektrischen/elektronischen Installationsgerät mit Passiv-Infrarot-Bewegungsmelder liegt der vorliegenden Erfindung die Aufgabe zugrunde, bei besonders zuverlässiger automatischer Erfassung von sich im Erfassungsbereich befindlichen Personen ein elektrisches/elektronisches Installationsgerät mit Passiv-Infrarot-Bewegungsmelder zu schaffen, welches bei einer guten Empfindlichkeit für einen Erfassungswinkel von ca. 180° eine flache Bauform mit besonders geringer Aufbauhöhe aufweist.

Erfindungsgemäß wird diese Aufgabe durch die im Hauptanspruch angegebenen Merkmale gelöst.

Bei einer solchen Ausbildung ist es für das Erfassungsverhalten besonders vorteilhaft, dass auch die Nutzung größerer Brennweiten möglich ist, weil den Linsensegmenten erste Spiegelelemente eines ersten Spiegelsystems und zweite Spiegelelemente eines zweiten Spiegelsystems nachgeschaltet sind, was eine Verlängerung des optischen Weges für die Infrarotstrahlung darstellt.

Weiterhin ist besonders vorteilhaft, dass die Abdeckung über drei Linsenflächen verfügt, die jeweils mit mehreren Linsensegmenten ausgerüstet sind. Dabei ist eine erste Linsenfläche parallel zur Installationswand angeordnet, welche über ihre ersten Linsensegmente besonders gut Infrarotstrahlung erfasst, die in einem Einfallswinkel von ca. 40° bis ca. 140° in Bezug auf die Installationswand auftreffen. Zudem sind zwei zweite Linsenflächen vorgesehen, die nahezu senkrecht zur Installationswand angeordnet sind, wobei diese über ihre zweiten Linsensegmente besonders gut Infrarotstrahlung erfassen, die einerseits in einem Einfallswinkel von ca. 0° bis ca. 40° und andererseits in einem Einfallswinkel von ca. 140° bis ca. 180° in Bezug auf die Installationswand auftreffen.

Weitere vorteilhafte Ausgestaltungen des erfindungsgemäßen Gegenstandes sind in den Unteransprüchen angegeben. Anhand zweier, in den Zeichnungen dargestellter Ausführungsbeispiele sei die Erfindung näher erläutert. Dabei zeigen:
- Figur 1:: prinziphaft ein elektrisches/elektronisches Installationsgerät mit Passiv-Infrarot-Bewegungsmelder, räumlich in Draufsicht, gemäß erstem Ausführungsbeispiel;
- Figur 2:: prinziphaft einen Ausschnitt des elektrischen/elektronischen Installationsgerätes gemäß Figur 1, vergrößert im Schnitt, entsprechend Linie A-A;
- Figur 3:: prinziphaft die elektrische Leiterplatte bestückt mit lediglich einem ersten, einem zweiten und einem dritten Spiegelsystem sowie denm zugehörigen Infrarotsensor, räumlich in schräger Draufsicht gemäß erstem Ausführungsbeispiel;
- Figur 4:: prinziphaft das elektrische/elektronische Installationsgerät gemäß Figur 1 im Schnitt, entsprechend Linie B-B;
- Figur 5:: prinziphaft ein elektrisches/elektronisches Installationsgerät mit Passiv-Infrarot-Bewegungsmelder, räumlich in Draufsicht, gemäß zweiten Ausführungsbeispiel;
- Figur 6:: prinziphaft einen Ausschnitt des elektrischen/elektronischen Installationsgerätes gemäß Figur 5, vergrößert im Schnitt, in räumlicher Darstellung;
- Figur 7:: prinziphaft das elektrische/elektronische Installationsgerät gemäß Figur 1 im Schnitt, entsprechend Linie D-D.

Wie aus den Figuren hervorgeht, besteht ein solches elektrisches/elektronisches Installationsgerät mit Passiv-Infrarot-Bewegungsmelder im Wesentlichen aus zwei Infrarotsensoren 1 und mehreren Spiegelsystemen 2, 3, 4 sowie einer, mehrere erste und zweite Linsensegmente 7, 12 aufweisenden Abdeckung 5. Zumindest eines der Spiegelsysteme 2, 3, 4 und die beiden Infrarotsensoren 1 sind auf einer elektrischen Leiterplatte 6 angeordnet, welche zudem zumindest mit den, für die Funktion des Passiv-Infrarot-Bewegungsmelders notwendigen - der Einfachheit halber nicht dargestellten - elektrischen/elektronischen Bauteile bestückt ist. Die elektrische Leiterplatte 6 ist am Boden 14 des Installationsgerätegehäuses festgelegt. Das erste Spiegelsystem 2 weist für jedes erste Linsensegment 7 der parallel zur Installationswand verlaufenden ersten Linsenfläche 8 der Abdeckung 5 jeweils ein eigenes erstes Spiegelelement 9 auf, welche die von außen über die zugehörigen ersten Linsenelemente 7 zugeführte Infrarotstrahlung jeweils auf ein zweites Spiegelelement 10 eines zweiten Spiegelsystems 3 leiten. Es sei darauf hingewiesen, dass sich mehrere erste Spiegelelemente 9 in einer größer ausgeführten Spiegelelementeanordnung abbilden können. Wichtig ist, dass für jeden optischen Weg eigene erste Spiegelelemente 9 vorgehalten werden. Die zweiten Spiegelelemente 10 des zweiten Spiegelsystems 3 übertragen dann die Infrarotstrahlung gebündelt auf den zugehörigen Infrarotsensor 1. Zudem ist ein drittes Spiegelsystem 4 vorgesehen. Dieses dritte Spiegelsystem 4 weist zwei winklig angestellte Flachspiegelelemente 11 auf. Die beiden Flachspiegelelemente11 sind für alle zugehörigen zweiten Linsensegmente 12 einer der beiden, quasi senkrecht zur Installationswand verlaufenden zweiten Linsenfläche 13 vorgesehen. Diese beiden Flachspiegelelemente 11 übertragen die von außen über die zugehörigen zweiten Linsenelemente 12 zugeführte Infrarotstrahlung zunächst auf zugehörige erste Spiegelelemente 9 des ersten Spiegelsystems 2, um diese dann auf zugehörige zweite Spiegelelemente 10 des zweiten Spiegelsystems 3 zu übertragen. Die zweiten Spiegelelemente 10 des zweiten Spiegelsystems 3 übertragen dann die Infrarotstrahlung gebündelt auf den zugehörigen, mit Abstand zu den drei Spiegelsystemen 2, 3, 4 auf der elektrischen Leiterplatte 6 angeordneten Infrarotsensor 1.

Bei den beiden im Nachhinein näher beschriebenen und in den Figuren prinziphaft dargestellten Ausführungsbeispielen ist immer eine einzige elektrische Leiterplatte 6 vorgesehen, die mit zwei Infrarotsensoren 1 bestückt ist. Jedem der beiden Infrarotsensoren 1 ist ein erstes Spiegelsystem 2, ein zweites Spiegelsystem 3 und ein drittes Spiegelsystem 4 zugeordnet. Die Abdeckung 5 bzw. Optik weist deshalb in ihrer ersten Linsenfläche 8 achtzehn erste Linsensegmente 7 auf, die in zwei Linsengruppen mit je neun ersten Linsensegmenten 7 aufgeteilt sind und zwei zweite Linsenflächen 13 auf, in die jeweils zwei zweite Linsensegmente 12 eingeformt sind. Wie des Weiteren aus den Figuren hervorgeht, sind die achtundzwanzig ersten Spiegelelemente 9 der beiden ersten Spiegelsysteme 2 treppenförmig in jeweils zwei Treppenstrecken angeordnet. Jedes der beiden ersten Spiegelsysteme 2 weist vierzehn erste Spiegelelemente 9 auf. Die zweiten Spiegelelemente 10 der beiden zweiten Spiegelsysteme 3 sind jeweils in Art eines Gebirges angeordnet und weisen achtunddreißig zweite Spiegelelemente 10 auf. Es sind zudem zwei dritte Spiegelsysteme 4 vorgesehen, die jeweils zwei winklig angestellte Flachspiegelelemente 11 aufweisen. Jedem der achtzehn ersten Linsensegmente 7 ist ein eigenes erstes Spiegelelement 9 und ein eigenes zweites Spiegelelement 10 zugeordnet. Jedes der vier zweiten Linsensegmente 12 wird, mittels fünf optischer Wege über zumindest zwei der drei Spiegelsysteme 2, 3, 4, auf einen der beiden zugehörigen Infrarotsensoren 1 abgebildet. Die Flachspiegelelemente 11 dienen dazu, um die durch die zweiten Linsensegmente 12 hindurchtretende Infrarotstrahlung auf die zugehörigen ersten Spiegelelemente 9 des ersten Spiegelsystems 2 umzulenken.

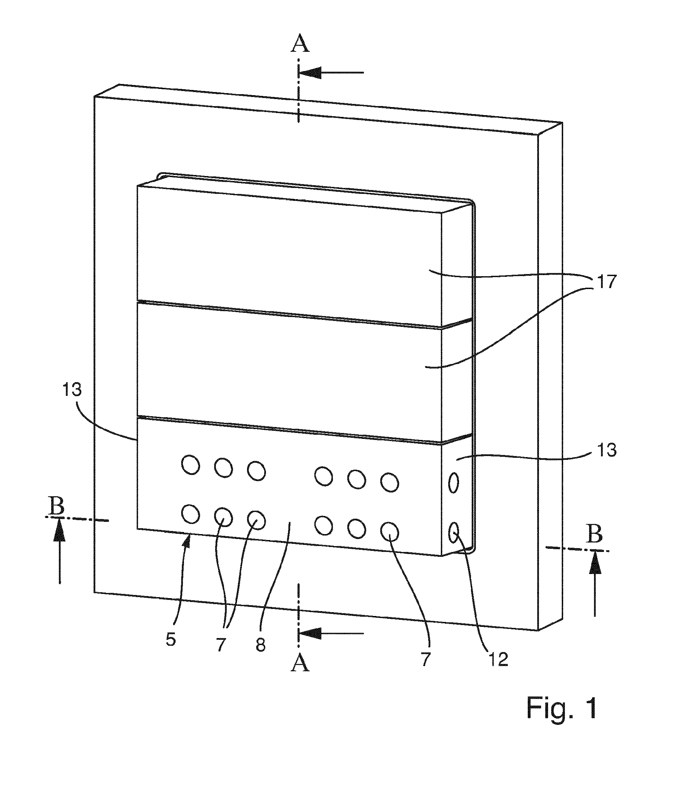

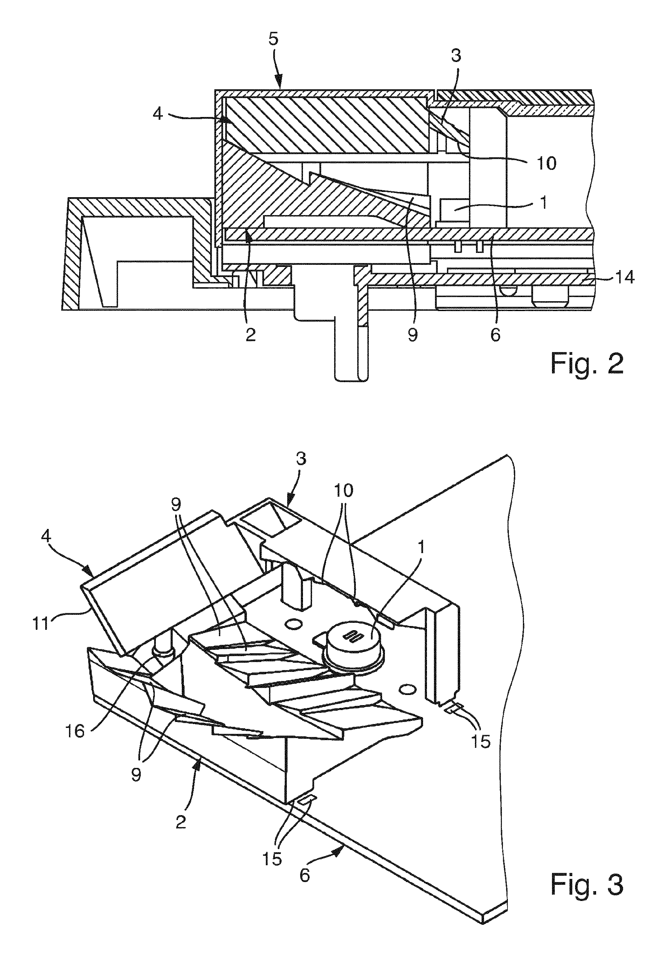

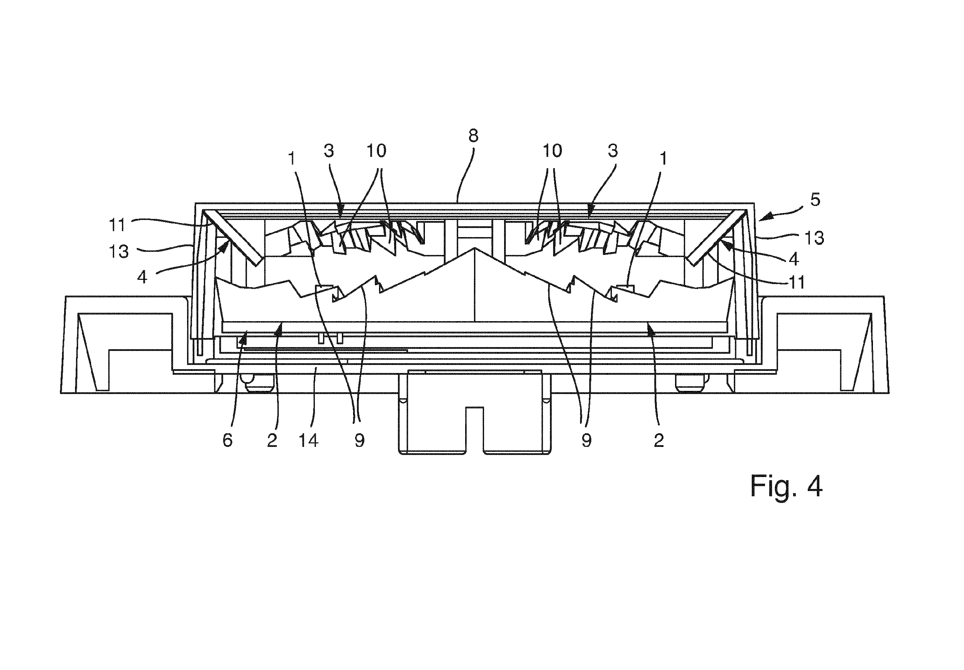

Wie insbesondere aus den Figuren 2 bis 4 hervorgeht, ist zur Vereinfachung von Herstellung und Montage eine Funktionsbaugruppe vorgesehen, die lediglich eine einzige elektrische Leiterplatte 6 aufweist. Bestückt ist diese elektrische Leiterplatte 6 mit zwei Infrarotsensoren 1 und zwei ersten Spiegelsystemen 2, zwei zweiten Spiegelsystemen 3 und zwei dritten Spiegelsystemen 4. Zudem weist die elektrische Leiterplatte 6 die - der Einfachheit halber nicht dargestellten - zur Funktion notwendigen elektrischen/elektronischen Bauteilen auf. Zur Vereinfachung von Herstellung und Montage dient auch die Bildung von zwei Spiegelbaugruppen, wobei je Spiegelbaugruppe ein zweites Spiegelsystem 3 einstückig an ein drittes Spiegelsystem 4 angeformt ist und dieses dritte Spiegelsystem 4 über miteinander in Wirkverbindung kommende Rastelelemente 16 am zugehörigen ersten Spiegelsystem 2 festgelegt ist. Auf einfache Art und Weise können damit diese beiden Spiegelbaugruppen an der elektrischen Leiterplatte 6 festgelegt werden. Jeweils eine solchermaßen ausgebildete Spiegelbaugruppe wird in Zuordnung zu einem der beiden Infrarotsensoren 1 an der elektrischen Leiterplatte 6 befestigt. Zur Befestigung sind an dem ersten Spiegelsystem 2 und an dem zweiten Spiegelsystem 3 jeweils mehrere als Rasthaken ausgebildete Rastmittel 15 vorhanden, welche mit entsprechend als Rastausnehmungen ausgeführten Rastmitteln 15 der elektrischen Leiterplatte 6 in Wirkverbindung kommen. Wie insbesondere aus Figur 1 hervorgeht, ist das elektrische/elektronische Installationsgerät nicht nur mit einem Passiv-Infrarot-Bewegungsmelder versehen, sondern weist zudem zwei manuell zu betätigende elektrische Schalteranordnungen auf. Der Einfachheit halber sind lediglich die beiden Betätigungstasten 17 dieser Schalteranordnung dargestellt.

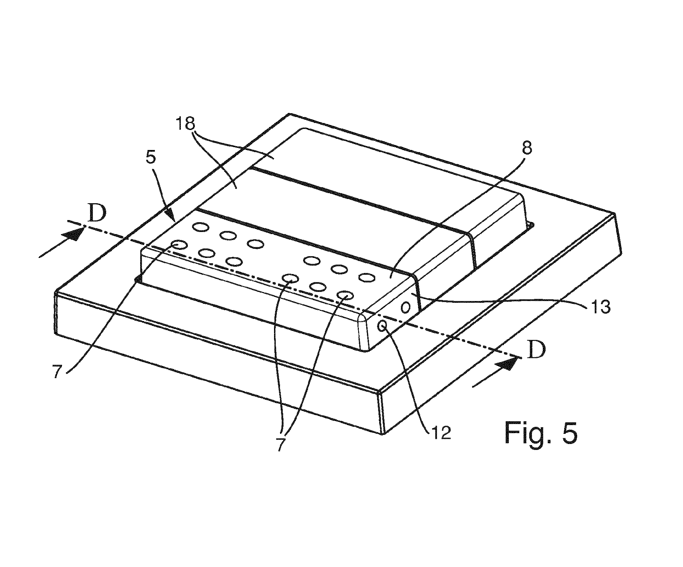

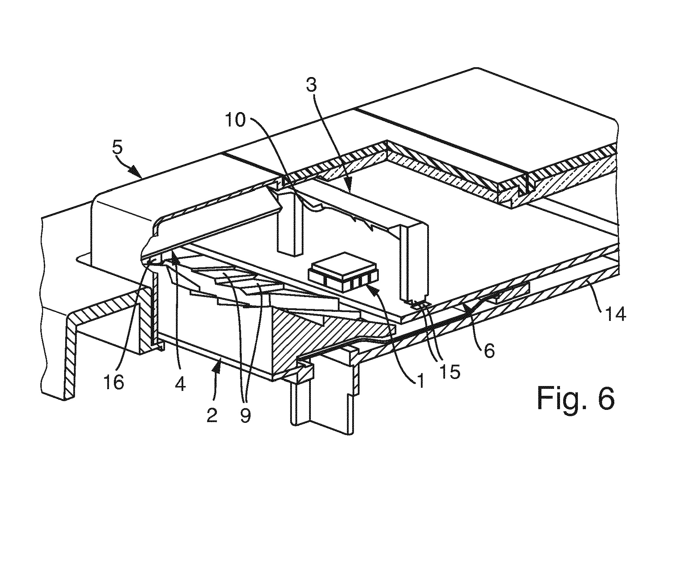

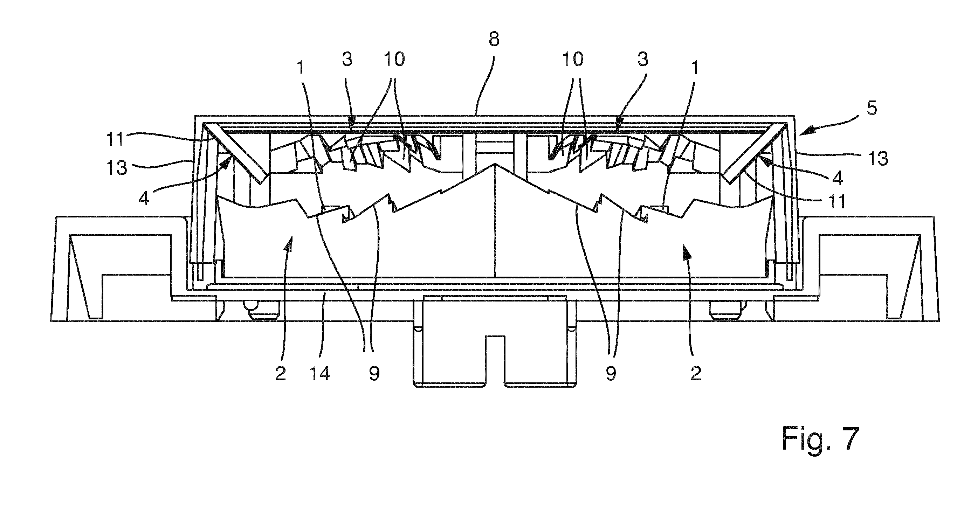

Wie insbesondere aus den Figuren 6 bis 7 hervorgeht, ist zur Vereinfachung von Herstellung und Montage eine Funktionsbaugruppe vorgesehen, die lediglich eine einzige elektrische Leiterplatte 6 aufweist. Bestückt ist diese elektrische Leiterplatte 6 mit zwei Infrarotsensoren 1 und zwei zweiten Spiegelsystemen 3. Die beiden ersten Spiegelsysteme 2 und die beiden dritten Spiegelsystemen 4 sind direkt am Boden 14 des Installationsgerätegehäuses festgelegt. Zudem weist die elektrische Leiterplatte 6 die - der Einfachheit halber nicht dargestellten - zur Funktion notwendigen elektrischen/elektronischen Bauteilen auf. Zur Vereinfachung von Herstellung und Montage dient auch die Bildung von zwei Spiegelbaugruppen, wobei je Spiegelbaugruppe ein zweites Spiegelsystem 3 einstückig an ein drittes Spiegelsystem 4 angeformt ist und dieses dritte Spiegelsystem 4 über miteinander in Wirkverbindung kommende Rastelelemente 16 am zugehörigen ersten Spiegelsystem 2 festgelegt ist. Auf einfache Art und Weise können damit diese beiden Spiegelbaugruppen an der elektrischen Leiterplatte 6 und am Boden 14 des Installationsgerätegehäuses festgelegt werden. Jeweils eine solchermaßen ausgebildete Spiegelbaugruppe wird in Zuordnung zu einem der beiden Infrarotsensoren 1 an der elektrischen Leiterplatte 6 und am Boden 14 befestigt. Zur Befestigung sind an dem ersten Spiegelsystem 2 und an dem zweiten Spiegelsystem 3 jeweils mehrere als Rasthaken ausgebildete Rastmittel 15 vorhanden, welche mit entsprechend als Rastausnehmungen ausgeführten Rastmitteln 15 der elektrischen Leiterplatte 6 oder des Boden 14 in Wirkverbindung kommen. Wie insbesondere aus Figur 5 hervorgeht, ist das elektrische/elektronische Installationsgerät nur mit einem Passiv-Infrarot-Bewegungsmelder versehen, weshalb der Abdeckung 5 bzw. Optik lediglich zwei Designblenden 18 zugeordnet sind.

Auf einfache Art und Weise ist somit ein elektrisches/elektronisches Installationsgerät mit Passiv-Infrarot-Bewegungsmelder realisiert, welches bei besonders zuverlässiger automatischer Erfassung von sich im Erfassungsbereich befindlichen Personen eine flache Bauform mit besonders geringer Aufbauhöhe aufweist. Dabei ist eine gute Empfindlichkeit für einen Erfassungswinkel von ca. 180° gewährleistet. Bei der vorbeschriebenen Ausbildung ist es für das Erfassungsverhalten besonders vorteilhaft, dass auch die Nutzung größerer Brennweiten möglich ist, weil den ersten und zweiten Linsensegmenten 7,12 erste Spiegelelemente 9 eines ersten Spiegelsystems 2 und zweite Spiegelelemente 10 eines zweiten Spiegelsystems 3 nachgeschaltet sind, was eine Verlängerung des optischen Weges für die Infrarotstrahlung darstellt. Weiterhin ist besonders vorteilhaft, dass die Abdeckung 5 bzw. Optik über eine erste und zwei zweite Linsenflächen 8, 13 verfügt, die jeweils mehrere erste Linsensegmente 7 und zweite Linsensegmente 12 aufweisen. Dabei ist die erste Linsenfläche 8 parallel zur Installationswand angeordnet, welche über ihre ersten Linsensegmente 7 besonders gut Infrarotstrahlung erfasst, die in einem Einfallswinkel von ca. 40° bis ca. 140° in Bezug auf die Installationswand auftreffen. Zudem sind die beiden zweiten Linsenflächen 13 nahezu senkrecht zur Installationswand angeordnet, damit diese über ihre zweiten Linsensegmente 12 besonders gut Infrarotstrahlung erfassen, die einerseits in einem Einfallswinkel von ca. 0° bis ca. 40° und andererseits in einem Einfallswinkel von ca. 140° bis ca. 180° in Bezug auf die Installationswand auftreffen.

### Bezugszeichenliste

- 1: Infrarotsensor
- 2: Erstes Spiegelsystem
- 3: Zweites Spiegelsystem
- 4: Drittes Spiegelsystem
- 5: Abdeckung
- 6: Leiterplatte
- 7: Erste Linsenelemente
- 8: Erste Linsenfläche
- 9: Erste Spiegelelemente
- 10: Zweite Spiegelelemente
- 11: Flachspiegelelement
- 12: Zweite Linsensegmente
- 13: Zweite Linsenfläche
- 14: Boden
- 15: Rastmittel
- 16: Rastelemente
- 17: Betätigungstasten
- 18: Designblenden

## Patentansprüche

1. Elektrisches/elektronisches Installationsgerät mit Passiv-Infrarot-Bewegungsmelder, der mehrere Erfassungsbereiche aufweist und aus zumindest einem Infrarotsensor, zumindest einem mehrere Spiegelelemente aufweisenden Spiegelsystem und einer mehrere Linsensegmente aufweisenden Abdeckung besteht, wobei der zumindest eine Infrarotsensor auf einer am Boden eines Installationsgerätegehäuses festlegbaren elektrischen Leiterplatte angeordnet ist, welche zudem mit zumindest einem Teil der für die Funktion des Passiv-Infrarot-Bewegungsmelders notwendigen elektrischen/elektronischen Bauteile bestückt ist, **dadurch gekennzeichnet, dass** ein erstes Spiegelsystem (2) vorgesehen ist, das für mehrere erste Linsensegmente (7) der Abdeckung (5) jeweils zumindest ein eigenes erstes Spiegelelement (9) aufweist, welche die, von außen über das zugehörige erste Linsensegment (7) zugeführte Infrarotstrahlung jeweils über zumindest ein zweites Spiegelelement (10) eines zweiten Spiegelsystems (3) auf den, zumindest einen, auf der elektrischen Leiterplatte (6) angeordneten Infrarotsensor (1) übertragen.

2. Elektrisches/elektronisches Installationsgerät nach Anspruch 1, **dadurch gekennzeichnet, dass** die Abdeckung (5) zumindest eine, parallel zur Installationswand verlaufende erste Linsenfläche (8) mit mehreren ersten Linsensegmenten (7) und zumindest eine, senkrecht zur Installationswand verlaufende zweite Linsenfläche (13) mit mehreren zweiten Linsensegmenten (12) aufweist, und dass zumindest ein drittes Spiegelsystem (4) vorgesehen ist, welches zumindest ein, winklig angestelltes Flachspiegelelement (11) aufweist.

3. Elektrisches/elektronisches Installationsgerät nach einem der Ansprüche 1 oder 2, **dadurch gekennzeichnet, dass** zumindest ein Spiegelsystem (2, 3, 4) zur Bildung einer Funktionsbaugruppe an der elektrischen Leiterplatte (6) festgelegt ist, welche auch mit dem zumindest einem Infrarotsensor (1) bestückt ist.

4. Elektrisches/elektronisches Installationsgerät nach einem der Ansprüche 1 bis 3, **dadurch gekennzeichnet, dass** zumindest ein Spiegelsystem (2, 3, 4) am Boden des Installationsgerätegehäuses festgelegt ist.

5. Elektrisches/elektronisches Installationsgerät nach einem der Ansprüche 1 bis 4, **dadurch gekennzeichnet, dass** die elektrische Leiterplatte (6) mit zumindest zwei Infrarotsensoren (1) bestückt ist.

6. Elektrisches/elektronisches Installationsgerät nach einem der Ansprüche 1 bis 5, **dadurch gekennzeichnet, dass** an der elektrischen Leiterplatte (6) zumindest zwei Spiegelsysteme (2, 3, 4) festgelegt sind.

7. Elektrisches/elektronisches Installationsgerät nach einem der Ansprüche 1 bis 6, **dadurch gekennzeichnet, dass** am Boden des Installationsgerätegehäuses zumindest zwei Spiegelsysteme (2, 3, 4) festgelegt sind.

8. Elektrisches/elektronisches Installationsgerät nach einem der Ansprüche 1 bis 7, **dadurch gekennzeichnet, dass** die ersten Spiegelelemente (9) des ersten Spiegelsystems (2) treppenförmig in zumindest einer Treppenstrecke angeordnet sind.

9. Elektrisches/elektronisches Installationsgerät nach einem der Ansprüche 1 bis 8, **dadurch gekennzeichnet, dass** die zweiten Spiegelelemente (10) des zweiten Spiegelsystems (3) in Art eines Gebirges angeordnet sind.

10. Elektrisches/elektronisches Installationsgerät nach einem der Ansprüche 1 bis 9, **dadurch gekennzeichnet, dass** zumindest zwei Spiegelsysteme (2, 3, 4) durch miteinander in Wirkverbindung kommende Rastelemente (16) zu einer Spiegelbaugruppe zusammengefasst sind.

11. Elektrisches/elektronisches Installationsgerät nach einem der Ansprüche 1 bis 10, **dadurch gekennzeichnet, dass** zumindest ein Spiegelsystem (2, 3, 4) über miteinander in Wirkverbindung kommende Rastmittel (15) an der elektrischen Leiterplatte (6) festgelegt ist.

12. Elektrisches/elektronisches Installationsgerät nach einem der Ansprüche 1 bis 11, **dadurch gekennzeichnet, dass** zumindest zwei Spiegelsysteme (2, 3, 4) zur Bildung einer Spiegelbaugruppe einstückig ausgeführt sind.

13. Elektrisches/elektronisches Installationsgerät nach einem der Ansprüche 1 bis 12, **dadurch gekennzeichnet, dass** zumindest eine manuell zu betätigende elektrische Schalteranordnung vorhanden ist.

14. Elektrisches/elektronisches Installationsgerät nach einem der Ansprüche 1 bis 13, **dadurch gekennzeichnet, dass** zumindest eine Anzeigeeinrichtung vorhanden ist.

15. Elektrisches/elektronisches Installationsgerät nach einem der Ansprüche 1 bis 14, **dadurch gekennzeichnet, dass** der Boden (14) des Installationsgerätegehäuses zumindest einen abgesenkten Bodenbereich aufweist.

## Geänderte Patentansprüche

### Geänderte Patentansprüche gemäss Regel 137(2) EPÜ.

1. Elektrisches/elektronisches Installationsgerät mit Passiv-Infrarot-Bewegungsmelder, der mehrere Erfassungsbereiche aufweist und aus zumindest einem Infrarotsensor (1), zumindest einem ersten und zweiten, jeweils mehrere Spiegelelemente (9, 10) aufweisenden Spiegelsystem (2, 3) und einer mehrere Linsensegmente (7, 8) aufweisenden Abdeckung (5) besteht, wobei der zumindest eine Infrarotsensor (1) auf der am Boden (14) des Installationsgerätegehäuses festlegbaren elektrischen Leiterplatte (6) angeordnet ist, welche zudem mit zumindest einem Teil der für die Funktion des Passiv-Infrarot-Bewegungsmelders notwendigen elektrischen/elektronischen Bauteile bestückt ist, wobei das erste Spiegelsystem (2) für mehrere erste Linsensegmente (7) der Abdeckung (5) jeweils zumindest ein eigenes erstes Spiegelelement (9) aufweist, welche die, von außen über das zugehörige erste Linsensegment (7) zugeführte Infrarotstrahlung jeweils über zumindest ein zweites Spiegelelement (10) des zweiten Spiegelsystems (3) auf den, zumindest einen, auf der elektrischen Leiterplatte (6) angeordneten Infrarotsensor (1) übertragen, **dadurch gekennzeichnet, dass** das erste Spiegelsystem (2) für jedes erste Linsensegment (7) jeweils zumindest ein eigenes erstes Spiegelelement (9) aufweist, welche die von außen über die zugehörigen ersten Linsensegmente (7) zugeführte Infrarotstrahlung jeweils auf ein zweites Spiegelelement (10) des zweiten Spiegelsystems (3) leiten und dass die ersten Spiegelelemente (9) des ersten Spiegelsystems (2) treppenförmig in zumindest einer Treppenstrecke angeordnet sind, und dass die zweiten Spiegelelemente (10) des zweiten Spiegelsystems (3) in Art eines Gebirges angeordnet sind, und dass die Abdeckung (5) zumindest eine, parallel zu einer Installationswand verlaufende erste Linsenfläche (8) mit mehreren ersten Linsensegmenten (7) und zumindest eine, senkrecht zu dieser Installationswand verlaufende zweite Linsenfläche (13) mit mehreren zweiten Linsensegmenten (12) aufweist, und dass zumindest ein drittes Spiegelsystem (4) vorhanden ist, welches zumindest ein, winklig angestelltes Flachspiegelelement (11) aufweist.

2. Elektrisches/elektronisches Installationsgerät nach Anspruch 1, **dadurch gekennzeichnet, dass** zumindest ein Spiegelsystem (2, 3, 4) zur Bildung einer Funktionsbaugruppe an der elektrischen Leiterplatte (6) festgelegt ist, welche auch mit dem zumindest einem Infrarotsensor (1) bestückt ist.

3. Elektrisches/elektronisches Installationsgerät nach einem der Ansprüche 1 oder 2, **dadurch gekennzeichnet, dass** zumindest ein Spiegelsystem (2, 3, 4) am Boden des Installationsgerätegehäuses festgelegt ist.

4. Elektrisches/elektronisches Installationsgerät nach einem der Ansprüche 1 bis 3, **dadurch gekennzeichnet, dass** die elektrische Leiterplatte (6) mit zumindest zwei Infrarotsensoren (1) bestückt ist.

5. Elektrisches/elektronisches Installationsgerät nach einem der Ansprüche 1 bis 4, **dadurch gekennzeichnet, dass** an der elektrischen Leiterplatte (6) zumindest zwei Spiegelsysteme (2, 3, 4) festgelegt sind.

6. Elektrisches/elektronisches Installationsgerät nach einem der Ansprüche 1 bis 5, **dadurch gekennzeichnet, dass** am Boden des Installationsgerätegehäuses zumindest zwei Spiegelsysteme (2, 3, 4) festgelegt sind.

7. Elektrisches/elektronisches Installationsgerät nach einem der Ansprüche 1 bis 6, **dadurch gekennzeichnet, dass** zumindest zwei Spiegelsysteme (2, 3, 4) durch miteinander in Wirkverbindung kommende Rastelemente (16) zu einer Spiegelbaugruppe zusammengefasst sind.

8. Elektrisches/elektronisches Installationsgerät nach einem der Ansprüche 1 bis 7, **dadurch gekennzeichnet, dass** zumindest ein Spiegelsystem (2, 3, 4) über miteinander in Wirkverbindung kommende Rastmittel (15) an der elektrischen Leiterplatte (6) festgelegt ist.

9. Elektrisches/elektronisches Installationsgerät nach einem der Ansprüche 1 bis 8, **dadurch gekennzeichnet, dass** zumindest zwei Spiegelsysteme (2, 3, 4) zur Bildung einer Spiegelbaugruppe einstückig ausgeführt sind.

10. Elektrisches/elektronisches Installationsgerät nach einem der Ansprüche 1 bis 9, **dadurch gekennzeichnet, dass** zumindest eine manuell zu betätigende elektrische Schalteranordnung vorhanden ist.

11. Elektrisches/elektronisches Installationsgerät nach einem der Ansprüche 1 bis 10, **dadurch gekennzeichnet, dass** zumindest eine Anzeigeeinrichtung vorhanden ist.

12. Elektrisches/elektronisches Installationsgerät nach einem der Ansprüche 1 bis 11, **dadurch gekennzeichnet, dass** der Boden (14) des Installationsgerätegehäuses zumindest einen abgesenkten Bodenbereich aufweist.
